# EUROPÄISCHE PATENTANMELDUNG

(11) **EP 1 800 827 A2**
(43) Veröffentlichungstag der Anmeldung: **27.06.2007**
(21) Anmeldenummer: 06026112.0
(22) Anmeldetag: 16.12.2006
(51) Int. Cl.: B29C 37/04

(54) **Verfahren zum Bearbeiten von Fensterrahmen**

(30) Priorität: 23.12.2005 DE 102005062133
(71) Anmelder: WILLI STÜRTZ MASCHINENBAU GmbH, 53577 Neustadt/Wied-Rott (DE)
(72) Erfinder: Stuertz, Karl-Heinz, 53577 Neustadt/Wied-Rott (DE); Zenker, Dieter, 50539 Köln (DE)
(74) Vertreter: Kossobutzki, Walter

(57) **Zusammenfassung**

Die Erfindung bezieht sich auf ein Verfahren zum Bearbeiten insbesondere der Schweißraupen eines aus Kunststoffprofilen zusammengeschweißten Fensterrahmens mittels mindestens zwei Bearbeitungswerkzeugen, die jeweils an einer an jeder Seite des Fensterrahmens befindlichen Bearbeitungseinheit angeordnet und aus einer Ruhestellung in eine Arbeitsstellung anstellbar sind, wobei der Fensterrahmen und die Bearbeitungseinheiten mit ihrem Werkzeug relativ zueinander in eine auf die zu bearbeitende Schweißnaht ausgerichtete Position gebracht werden.

Um ohne allzu großen Aufwand auch solche Ecken an Fensterrahmen - mit oder ohne Kämpfer bzw. Kreuzkämpfer - einwandfrei bearbeiten zu können, die keinen Winkel von 90° aufweisen, wird der Fensterrahmen zunächst in einer zumindest annähernd der Bearbeitungsposition entsprechenden Lage festgespannt, dann die genaue Lage des festgespannten Fensterrahmens, insbesondere aber die zu bearbeitende Schweißraupe, abgetastet und anschließend werden die Bearbeitungseinheiten mit ihren Bearbeitungswerkzeugen in Abhängigkeit von den abgetasteten Werten auf die Schweißnaht bzw. die Schweißebene des Fensterrahmens ausgerichtet.

## Beschreibung

Die Erfindung bezieht sich auf ein Verfahren zum Bearbeiten insbesondere der Schweißraupen eines aus Kunststoffprofilen zusammengeschweißten Fensterrahmens mittels mindestens zwei Bearbeitungswerkzeugen, die jeweils an einer an jeder Seite des Fensterrahmens befindlichen Bearbeitungseinheit angeordnet und aus einer Ruhestellung in eine Arbeitsstellung anstellbar sind, wobei der Fensterrahmen und die Bearbeitungseinheiten mit ihrem Werkzeug relativ zueinander in eine auf die zu bearbeitende Schweißnaht aus gerichtete Position gebracht werden.

Fensterrahmen aus Kunststoff - dies können sowohl Blendrahmen als auch Flügelrahmen sein - werden aus Profilstäben aus Kunststoff unter Druck zusammengeschweißt. Dabei kann der Fensterrahmen auch einen sogenannten Kämpfer oder einen Kreuzkämpfer enthalten. An den geschweißten Ecken und gegebenenfalls an den Kämpferecken müssen anschließend an den sichtbaren Stellen die überstehenden Bereiche der Schweißnähte entfernt werden. Dies erfolgt mittels besonderer Vorrichtungen, die - an beiden Seiten des Fensterrahmens - eine, zwei, vier oder sogar sechs Bearbeitungseinheiten aufweisen, die mindestens eine Halterung für die Aufnahme eines Bearbeitungswerkzeuges tragen. Als Bearbeitungswerkzeuge können beispielsweise unterschiedliche Messer, Fräser, Bohrer und dergleichen eingesetzt werden. Dabei können die Bearbeitungswerkzeuge einzeln aus einer Grundstellung in eine Arbeitsstellung bewegt werden, aus der dann der Arbeithub eingeleitet wird. Bei Bearbeitung der Schweißraupen eines Fensterrahmens - dies wird auch als Putzen bezeichnet - sind die Bearbeitungseinheiten stets ortfest bzw. drehfest angeordnet und der Fensterrahmen wird über Anschläge in eine genau vorgegebene Position zu den Bearbeitungseinheiten gebracht.

Die normalen Ecken eines zu bearbeitenden Fensterrahmens haben - abgesehen von geringfügigen und für die Bearbeitung unbedeutenden Abweichungen - immer einen rechten Winkel. Anders sieht dies jedoch bei Kämpferecken und den Ecken von vorgefertigten und bereits geputzten Kämpferkreuzen aus. Hier besteht die Gefahr, dass die Winkel der Ecken zwischen einem Kämpfer bzw. einem Kreuzkämpfer und dem eigentlichen Rahmenprofil des Fensterrahmens geringfügig kleiner oder größer als 90° sind. Auch Trapezecken und Spitzecken besitzen niemals einen Winkel von 90°. Hier ist ein genaues Ausrichten des Fensterrahmens auf die eigentliche Bearbeitungsposition nicht immer sichergestellt, was zwangsläufig die Güte der Bearbeitung des Fensterrahmens beeinträchtigen kann.

Der vorliegenden Erfindung liegt nun die Aufgabe zugrunde, ein Verfahren aufzuzeigen, mit dem es ohne allzu großen Aufwand möglich ist, auch solche Ecken an Fensterrahmen - mit oder ohne Kämpfer bzw. Kreuzkämpfer - einwandfrei zu bearbeiten, die keinen Winkel von 90° aufweisen.

Zur Lösung dieser Aufgabe wird gemäß der Erfindung bei einem verfahren der eingangs beschriebenen Art vorgeschlagen, dass der Fensterrahmen zunächst in einer zumindest annähernd der Bearbeitungsposition entsprechenden Lage festgespannt, dann die genaue Lage des festgespannten Fensterrahmens, insbesondere aber die zu bearbeitende Schweißraupe, abgetastet und anschließend die Bearbeitungseinheiten mit ihren Bearbeitungswerkzeugen in Abhängigkeit von den abgetasteten Werten auf die Schweißnaht bzw. die Schweißebene des Fensterrahmens ausgerichtet werden.

Bei einem solchen Verfahren wird also nicht mehr die Schweißnaht des zu bearbeitenden Fensterrahmens auf die Bearbeitungseinheiten mit den Bearbeitungswerkzeugen ausgerichtet, sondern die Bearbeitungseinheiten werden in eine genaue Bearbeitungsposition zu dem Fensterrahmen bzw. zu der zu bearbeitenden Schweißnaht gebracht. Dies bedeutet, dass sich die Bearbeitungseinheiten unabhängig davon, ob der Fensterrahmen richtig eingespannt und der Winkel der zu bearbeitenden Ecke 90°, kleiner als 90° oder größer als 90° ist, immer äußerst genau in der Bearbeitungsposition befinden. Dies stellt eine einwandfreie Bearbeitung der Schweißnähte, auch bei Trapez- und Spitzecken sicher.

Weitere Merkmale des Verfahrens sowie einer Vorrichtung zur Durchführung des Verfahrens sind in den Ansprüchen 2 bis 15 offenbart.

Das erfindungsgemäße Verfahren sowie weitere Vorteile desselben werden nachfolgend anhand eines in einer Zeichnung dargestellten Ausführungsbeispieles näher erläutert.

In dieser Zeichnung ist eine Draufsicht auf stark vereinfachte, nicht maßstabsgerecht gezeichnete, erfindungsgemäße Vorrichtung zu sehen, mit der insbesondere die Schweißraupen eines aus Kunststoffprofilen zusammengeschweißten und einen Kämpfer 2 aufweisenden Fensterrahmens 1, der ebenfalls nur ausschnittsweise mit einer zu bearbeitenden Kämpferecke zu erkennen ist, bearbeitet werden kann. Auch Sonderbearbeitungen sind mit der erfindungsgemäßen Vorrichtung möglich. Gemäß der gewählten Darstellung soll eine Kämpferecke bearbeitet und dabei die an der Oberseite des Fensterrahmens 1 zu sehenden Scheißnaht entfernt werden.

Die Vorrichtung zur Bearbeitung eines fertig geschweißten Fensterrahmens 1 besteht aus einer quer zur Transportrichtung des Fensterrahmens 1 (Pfeil 3) verlaufenden Führung 4, die im gezeichneten Ausführungsbeispiel aus zwei mit Abstand parallel zueinander verlaufenden Führungsstangen gebildet ist. Auch andere Ausgestaltungen der Führung 4 sind möglich. Die Führung 4 befindet sich mit Abstand unterhalb des Fensterrahmens 1 und ist beispielsweise in einem portalartigen Gestell befestigt, dessen freier Durchlass geringfügig größer als das größte Breitenmaß eines Fensterrahmens 1 ist. Auch oberhalb des Fensterrahmens 1 befindet sich eine solche Führung 4, die jedoch zur besseren Deutlichkeit nicht eingezeichnet ist. Sowohl die obere als auch die untere Führung 4 nehmen jeweils einen Schlitten 5 auf, die mittels nicht gezeichneter Antriebe auf ihrer Führung 4 in Richtung des Doppelpfeiles 6 verschoben werden können. Der Schlitten 5 jeder Führung 4 trägt ein nur angedeutetes Drehgestell 7, auf dem ein sogenannter Arbeitsschlitten 8 angeordnet ist. Dem Drehgestell 7 ist ein Antrieb zugeordnet, durch den das Oberteil desselben in Richtung des Doppelpfeiles 9 grundsätzlich um jeden beliebigen Winkel, vorteilhaft jedoch nur um 270°, gedreht werden kann. Der Arbeitsschlitten 8 ist auf dem oberen Teil des Drehgestell 7 über einen an sich bekannten, allerdings ebenfalls nicht gezeichneten Antrieb in Richtung des Doppelpfeiles 10 verschieb- bzw. verfahrbar.

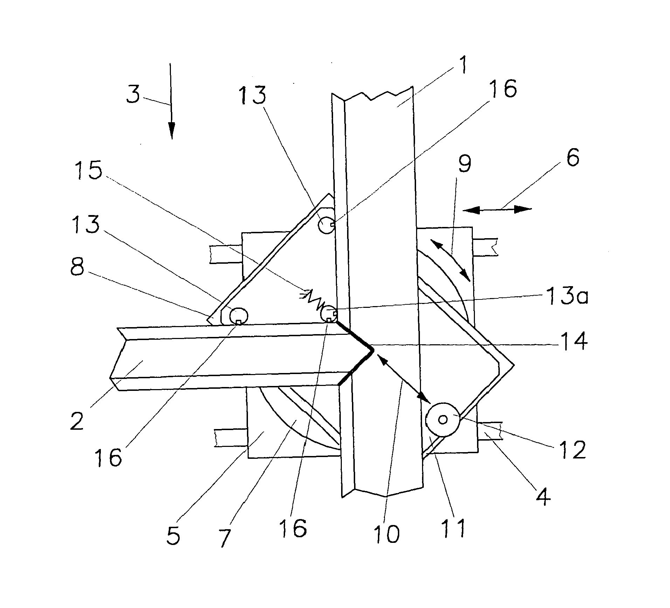

Jeder Arbeitsschlitten 8 nimmt einen Bearbeitungskopf 11 auf, der senkrecht zum Arbeitsschlitten 8 angehoben und natürlich auch wieder abgesenkt werden kann. Dies macht nicht gezeichnete Führungen und einen Antrieb erforderlich. Der Bearbeitungskopf 11 ist mit mindestens zwei an sich bekannten Bearbeitungswerkzeugen bestückt, die sich in der Zeichnung unterhalb des Fensterrahmens 1 befinden und von denen in der Zeichnung nur ein Scheibenfräser 12 zu sehen ist. Diese Bearbeitungswerkzeuge befinden sich in einer durch die Drehachse des Drehgestells 7 verlaufenden Ebene. Jedes Bearbeitungswerkzeug ist über eine Halterung auswechselbar auf dem Bearbeitungskopf 11 gehalten, über die es aus einer Grundstellung in eine Arbeitsstellung bewegbar ist. Ferner sind auf dem Bearbeitungskopf 11 drei unter einem Winkel von 45° angeordnete Zentrierstifte 13, 13a vorhanden, von denen der Zentrierstift 12a die eigentliche Ecke bildet. Diese Zentrierstifte 13, 13a können getrennt oder gemeinsam aus einer unteren Grundstellung, in der sie für den Fensterrahmen 1 für die Bearbeitungswerkzeuge nicht störend sind, bedarfsweise hochgefahren werden können. Dazu sind besondere, an sich bekannte, jedoch nicht gezeichnete Antriebe vorgesehen.

Die beschriebene Vorrichtung wird nun gemäß dem gezeichneten Ausführungsbeispiel zur Bearbeitung der Schweißraupe 14 einer Kämpferecke des Fensterrahmens 1 verwendet. Dabei wird davon ausgegangen, dass der Fensterrahmen 1 über die bereits erwähnte Transportvorrichtung in Richtung des Pfeiles 3, beispielsweise an einer seitlichen Führungsleiste anliegend, so weit in den Bereich der Vorrichtung geschoben wurde, bis er die gezeichnete Lage einnimmt. Diese Lage ist jedoch nicht zwingend. In dieser Lage wird nun der Fensterrahmen 1 festgespannt. Bei der Transportbewegung des Fensterrahmens 1 befinden sich die untere und die obere Bearbeitungseinheit, die jeweils aus einem Schlitten 5, einem Drehgestell 7, einem Arbeitsschlitten 8 und einem Bearbeitungskopf 11 mit den Halterungen und den dazugehörigen Bearbeitungswerkzeugen gebildet sind, in einer den Transport des Fensterrahmens nicht störenden Lage. In dieser Lage kann sich beispielsweise der Schlitten 5 mit Abstand rechts von der gezeichneten Lage befinden.

Aus dieser Lage werden zunächst der Schlitten 5a und das Drehgestell 7 in eine Position bewegt, die annähernd der gezeichneten Stellung entspricht. Jetzt werden die Antriebe für den Schlitten 5 und das Drehgestell 7 kurzzeitig entkoppelt. Über seinen Antrieb wird dann der Arbeitsschlitten 8 in eine Richtung des Doppelpfeiles 10 so weit unter den Fensterrahmen 1 verschoben, bis sich die Zentrierstifte 13, 13a innerhalb des Fensterrahmens 1 befinden. Danach werden die Zentrierstifte 13, 13a getrennt oder gemeinsam so weit angehoben, bis sie sich in der Höhenlage des Fensterrahmens 1 befinden. Wird jetzt der Antrieb des Arbeitsschlittens 8 in entgegengesetzter Richtung des Doppelpfeiles 10 angeschaltet - der Arbeitsschlitten 8 bewegt sich dabei nach außen - kommen die Zentrierstifte 13, 13a an der Innenseite des Fensterrahmens 1 und am Kämpfer 2 zum Anliegen und bewirken, dass sich die gesamte untere Bearbeitungseinheit frei und äußerst genau auf die Ebene der Schweißnaht zentriert. Dies ist auch dann der Fall, wenn der Fensterrahmen 1 nicht genau seine vorbestimmte Lage auf den Auflagen 14 einnimmt. Danach werden die Antriebe wieder gekuppelt und die Stifte 12 zurückbewegt. Sodann kann die Bearbeitung des Fensterrahmens 1 bzw. der Rahmenecke erfolgen. Diese Zentrierung der unteren Bearbeitungseinheit auf die Schweißebene kann auch für die obere Bearbeitungseinheit oder gleichzeitig zusammen mit derselben erfolgen.

Die Zentrierung der Bearbeitungseinheit ist nur dann auf die beschriebene Weise möglich, wenn die zu bearbeitende Rahmenecke einen Winkel von genau 90° aufweist. Ist dies jedoch nicht der Fall, muss beispielsweise der Zentrierstift 13a in Richtung der Schweißebene verschiebbar ausgebildet sein und in seiner Grundstellung durch eine nur angedeutete Feder 15 - es kann auch eine Kolbenzylindereinheit - gehalten werden. Der Zentrierstift 13a verschiebt sich dann bei der Bewegung des Arbeitsschlittens 11 nach außen und die Bearbeitungseinheit wird auch in einem solchen Fall genau auf die Schweißebene zentriert.

Es ist möglich, an den Zentrierstiften 13, 13a Drucksensoren 16 vorzusehen, die die Anpresskraft der Zentrierstifte 13, 13a an die Rahmenecke erfassen. Unterschiedliche Anpresskräfte können über einen an sich bekannten Rechner zur Steuerung der Drehung des Drehgestells 7 und der Bewegung des Arbeitsschlittens 11 genutzt werden. Auch auf diese Weise ist eine genaue Zentrierung der Bearbeitungseinheit auf die Schweißebene möglich.

Eine weitere Möglichkeit, die Bearbeitungseinheit auf die Schweißebene zu zentrieren besteht darin, zunächst den im Bereich der Vorrichtung bzw. deren Bearbeitungseinheiten festgespannten Fensterrahmen 1 zumindest im Bereich der zu bearbeitenden Ecken abzutasten, was beispielsweise mittels einer Kamera oder optischen Sensoren erfolgen kann. Die dabei ermittelten Werte werden anschließend in einen Rechner eingegeben und dort mit einem gespeicherten Raster verglichen werden. Daraus lässt sich dann die genaue Lage der zu bearbeitenden Ecke des Fensterrahmens ermitteln und die ermittelten Werte können zur Steuerung des Drehgestells 7 und es Arbeitsschlittens 11 verwendet werden.

Die letzten beiden Möglichkeiten der Zentrierung sind natürlich auch dann nutzbar, wenn die zu bearbeitenden Rahmenecken einen Winkel von genau 90° besitzen.

## Patentansprüche

1. Verfahren zum Bearbeiten insbesondere der Schweißraupen eines aus Kunststoffprofilen zusammengeschweißten Fensterrahmens mittels mindestens zwei Bearbeitungswerkzeugen, die jeweils an einer an jeder Seite des Fensterrahmens befindlichen Bearbeitungseinheit angeordnet und aus einer Ruhestellung in eine Arbeitsstellung anstellbar sind, wobei der Fensterrahmen und die Bearbeitungseinheiten mit ihrem Werkzeug relativ zueinander in eine auf die zu bearbeitende Schweißnaht ausgerichtete Position gebracht werden,
**dadurch gekennzeichnet,**
**dass** der Fensterrahmen zunächst in einer zumindest annähernd der Bearbeitungsposition entsprechenden Lage festgespannt, dann die genaue Lage des festgespannten Fensterrahmens, insbesondere aber die zu bearbeitende Schweißraupe, abgetastet und anschließend die Bearbeitungseinheiten mit ihren Bearbeitungswerkzeugen in Abhängigkeit von den abgetasteten Werten auf die Schweißnaht bzw. die Schweißebene des Fensterrahmens ausgerichtet werden.

2. Verfahren nach Anspruch 1
**dadurch gekennzeichnet,**
**dass** die Abtastung des Fensterrahmens bzw. der zu bearbeitenden Schweißraupe mechanisch durchgeführt wird.

3. Verfahren nach Anspruch 1,
**dadurch gekennzeichnet,**
**dass** die Abtastung des Fensterrahmens bzw. der zu bearbeitenden Schweißraupe optisch durchgeführt wird.

4. Verfahren nach Anspruch 2,
**dadurch gekennzeichnet,**
**dass** die Abtastung der zu bearbeitenden Ecke des Fensterrahmens über Zentrierstifte durchgeführt wird.

5. Verfahren nach Anspruch 2 und/oder 4,
**dadurch gekennzeichnet,**
**dass** die Abtastung der zu bearbeitenden Ecke des Fensterrahmens über Drucksensoren durchgeführt wird.

6. Verfahren nach Anspruch 3,
**dadurch gekennzeichnet,**
**dass** die Abtastung des Fensterrahmens über fotooptisch durchgeführt wird.

7. Verfahren nach Anspruch 3,
**dadurch gekennzeichnet,**
**dass** die Abtastung des Fensterrahmens mittels Lasersensoren durchgeführt wird.

8. Verfahren nach Anspruch 3, 6 und/oder 7,
**dadurch gekennzeichnet,**
**dass** die abgetasten Werte des Fensterrahmens mit in einem Rechner gespeicherten Werten verglichen werden.

9. Verfahren nach mindestens einem der Ansprüche 1 bis 8,
**dadurch gekennzeichnet,**
**dass** die Bearbeitungseinheiten mechanisch auf den Fenster rahmen bzw. auf die zu bearbeitende Schweißraupe ausgerichtet werden.

10. Verfahren nach Anspruch 4 und/oder 9,
**dadurch gekennzeichnet,**
**dass** die Bearbeitungseinheiten über die Zentrierstifte auf den Fensterrahmen bzw. auf die zu bearbeitende Schweißraupe ausgerichtet werden.

11. Verfahren nach mindestens einem der Ansprüche 1 bis 3 und 5 bis 9,
**dadurch gekennzeichnet,**
**dass** die Bearbeitungseinheiten über ihre Antriebe auf den Fensterrahmen bzw. auf die zu bearbeitende Schweißraupe ausgerichtet werden.

12. Vorrichtung zur Durchführung des Verfahrens nach mindestens einem der Ansprüche 1 bis 11, bestehend aus jeweils einer auf jeder Seite des zu bearbeitenden Fensterrahmens befindlichen Bearbeitungseinheit mit mindestens zwei unterschied lichen Bearbeitungswerkzeugen, die aus einer Grundstellung in eine Arbeitsstellung und in der Arbeitsstellung zur Durchführung eines Arbeitshubes bewegbar sind,
**dadurch gekennzeichnet,**
**dass** die Bearbeitungseinheit frei drehbar gelagert und mit drei in den Eckbereich des Fensterrahmens (1) bewegbaren und unter einem Winkel von 90° zueinander angeordneten Zentrierstiften (13, 13a) versehen ist.

13. Vorrichtung nach Anspruch 12,
**dadurch gekennzeichnet,**
**dass** der mittlere Zentrierstift (13a) entgegen einer Kraft verschiebbar gelagert ist.

14. Vorrichtung nach Anspruch 12 oder 13,,
**dadurch gekennzeichnet,**
**dass** zumindest dem mittleren Zentrierstift ( ) ein Drucksensor (16) zugeordnet ist.

15. Vorrichtung zur Durchführung des Verfahrens nach mindestens einem der Ansprüche 1 bis 11, bestehend aus jeweils einer auf jeder Seite des zu bearbeitenden Fensterrahmens befindlichen Bearbeitungseinheit mit mindestens zwei unterschiedlichen Bearbeitungswerkzeugen, die aus einer Grundstellung in eine Arbeitsstellung und in der Arbeitsstellung zur Durchführung eines Arbeitshubes bewegbar sind,
**gekennzeichnet durch**
eine die Lage des eingespannten Fensterrahmens (1) bzw. dessen zu bearbeitende Ecke überprüfende Tasteinrichtung und eine über einen Antrieb drehbare Bearbeitungseinheit.
